Europäisches Patentamt

(19) European Patent Office

Office européen des brevets

(11) Publication number: **0 052 664**

A1

(12) **EUROPEAN PATENT APPLICATION**

(21) Application number: **80107253.9**

(22) Date of filing: **20.11.80**

(51) Int. Cl.³: **B 32 B 31/20**
**B 29 D 9/00**

(43) Date of publication of application:
**02.06.82 Bulletin 82/22**

(84) Designated Contracting States:
**AT CH DE FR GB IT LI SE**

(71) Applicant: **Cheetham, John Raymond**
**Villaveien 6**
**N-3670 Notodden(NO)**

(72) Inventor: **Cheetham, John Raymond**
**Villaveien 6**
**N-3670 Notodden(NO)**

(74) Representative: **Wilhelms, Rolf E., Dr. et al,**
**WILHELMS & KILIAN Patentanwälte Geibelstrasse 6**
**D-8000 München 80(DE)**

(54) **Method and press for the continuous production of flat sheet materials.**

(57) The invention concerns flat sheet press products for a variety of applications amongst which production of furniture, bulkheads and panel products can be mentioned.

The press material (2) which can be impregnated kraftpaper is transported through a press zone (3) with reciprocating and pulsating press elements (4). The pressure applied on the press material lies between 1-120 ato and preferably between 40-100 ato.

The pressure against the sheet formed press material is released before the reaction in the press material is completed and the transportation of press material through the press occurs during the period of no or reduced pressure. The press material leaves the reciprocating and pulsating press when the reaction in the press material is completed.

FIG. 1

EP 0 052 664 A1

WILHELMS & KILIAN

PATENTANWÄLTE

0052664

EUROPEAN PATENT ATTORNEYS     EUROPÄISCHE PATENTVERTRETER     MANDATAIRES EN BREVETS EUROPÉENS

DR. ROLF E. WILHELMS
DR. HELMUT KILIAN

GEIBELSTRASSE 6
8000 MÜNCHEN 80

TELEFON (089) 47 40 73·
TELEX     52 34 67 (wilp-d)
TELEGRAMME PATRANS MÜNCHEN
TELECOPIER gr. 2    (089) 222 066

NORSK HYDRO A.S.
Norway

- 1 -

## Method and Press for the continuous Production of flat sheet Materials

The invention concerns method and press for the continuous production of flat sheet press products for a variety of applications amongst which production of furniture, bulkheads and panel products can be mentioned.

Flat sheets press products of the type to which this invention refers are usually produced by placing the materials to be pressed between press plates of varying construction between which the material is subjected to heat and pressure or pressure alone and where the residence time under the applied pressure is determined by the characteristics of the materials being pressed, the pressure applied and the temperature of pressing.

An example of such flat sheet materials previously referred to are high and low pressure laminates based on melamineformaldehyde and phenolformaldehyde impregnated papers. Such laminates are produced conventionally by the lamination under heat and pressure of papers impregnated with the above mentioned thermosetting resins. Impregnated papers are, after impregnation and drying, laid up to form "books" or packets consisting of either phenolformaldehyde impregnated kraftpaper alone or together with melamineformaldehyde impregnated decorative and overlay papers. These packets are then pressed, usually in pairs separated by a greaseproof paper or its equivalent, between two polished or embossed pressplates in a press usually termed as a single or multidaylight press. Each opening or daylight is usually filled with several such packets. During pressing and under the influence of pressure and temperature the resins present in the impregnated papers first flow together and at a later stage condense to form a homogeneous laminate of thermosetting character. Laminates thus produced may have a decorative or non-decorative surface.

For high pressure laminates a pressure of 80-100 ato and a temperature of 140-150°C is usually preferred. After flow and condensation of the resins has taken place followed usually by cooling of the resultant laminates, a process normally requiring between 60 and 120 minutes, pressure is released, the laminates taken from the press and removed for further treatment which includes separating the laminate pairs, cutting to size and usually sanding of one side of the resultant laminate sheet.

As will be understood this conventional process is based on a sequence of many operations both before and after pressing. It is therefore understandable that for some time there has been considerable interest in developing a process for the continuous production of both high and low pressure laminates. It has, however, prooved difficult to achieve statisfactory results in attempts made up to the present to go from a discontinuous process, with the building up of packets of impregnated papers and their placing in a press, to a continuous process, where layers in the form of continuous sheets are fed simultaneously through a press system where they are subjected to heat and pressure and where flow and reaction of the incorporated resins takes place under the continuous application of the required heat and pressure.

The use of pressure rolls calenders which are natural alternatives do not give the possibility to maintain the required pressures evenly and for sufficient duration in order to produce a satisfactory end product.

Quality requirements are strict, surfaces must be of even high quality, reactions complete and the product homogeneous with complete lamination of the originally individual layers.

In order to achieve the required results it has been considered necessary to subject the resin impregnated papers to the effect of heat and continuous pressure until the necessary flow and reaction of the resins present is completed. In order to achieve a continuous production method it has therefore been considered necessary to make use of pressure zones between which the product moves continuously forward.

A method of this type is described in the German patent 1.216.522. According to this patent two movable belts which move together with the product pass through a thickness reducing passage. The two belts one on each side of the laminate being produced move continuously through a stationary thickness reducing passage. The forces required to draw the combination of product and through the thickness reducing passage are undesirably high. Additionally the materials are subjected to a relatively large thickness reduction, a fact which also creates considerably problems in practice. According to this German patent this problem is attempted solved by reducing the height of the thickness reducing passage in steps. The solution adopted creates, however, problems in the continuous feeding of the product.

In German patent 26 48 088 another continuous process is described. Two endless steel belts transport the materials to be pressed through a pressure zone. The pressure is applied to the endless steel belts from pneumatic pressure chambers where the pressure is applied by hot air. To reduce the sliding friction a cushion of compressed air is built up between the belts and the pressure elements. The pressure which can be applied to the material is limited but the process is in commercial use and can be described as a low pressure process, the maximum pressure being not higher but about 30 kp/cm².

It is thus the intention of this invention to provide a method and an apparatus for the continuous production of flat sheet materials with even and smooth surfaces where the material being pressed has time to completely react under the necessary application of heat and pressure. The solution of the object of the invention is a process according to claims 1 to 4, and the apparatus according to claims 5 and 6.

According to the invention these conditions are obtained by passing the materials to be pressed through a pressure zone where a pulsating pressure is applied and where the continuous or discontinuous materials move forward intermittently a predetermined distance each time the pressure cycle passes through a period of zero or reduced pressure.

If the time for completing the reaction in the press product is t (this time being a known characteristic of the product to be pressed under given heat and pressure conditions), the number n of pulsating cycles (pressure built-up and pressure reduction) corresponds to n = t : dt, dt being the duration of one cycle, and n being preferably two and more, particularly ten and more. At the same time transportation distance ds of the press product through the passage between the plane pressure elements (the length of the passage being s) during the period of zero or reduced pressure is ds = $\frac{s}{n}$, n having the same definition as before. In the preferred cases the period of zero or reduced pressure is short with respect to the period of the fully applied pressure.

Surprisingly it has been found that it is not necessary to maintain a completely constant pressure until the reactions within the resin system are completed but that under the correct conditions it is possible to release this pressure for short predetermined periods which are of sufficient duration to permit the forward movement of the materials during periods of zero or reduced pressure. The release of pressure as described before the completion of the reaction of the resins has been shown to have no detrimental effect on the quality of the final product either as far as surface characteristics or general quality are concerned. The materials being thus pressed appear to exhibit an intrinsic inertia resulting in the fact that short zero or reduced pressure periods have no detrimental effect on the final product.

Example

The invention will now be described more completely with reference to a practical example for the production of high pressure laminate.

Two continuous laminate sheets each consisting of 3 layers of kraftpapers impregnated with phenolformaldehyde resin, together with overlying decorative papers impregnated with melamineformaldehyde resin and hereafter called the press material were passed together between two stationary heated pressure plates with plane press surfaces where the temperature was 145°C and where the decorative surface faced outwards towards the pressure plates. The reverse sides of the press materials which faced each other were separated by release paper. The decorative surfaces of the press materials were covered with a suitable aluminium foil.

The heated pressure elements exercised a pressure of 80 ato for a period of 5 seconds followed by a period of zero or reduced pressure for 1 second. The length of the pressure elements was 750 mm and the press material was fed forwards 25 mm each time the pressure was released. This procedure resulted in the production of a finished laminated product of excellent quality. Smoothness and evenness as well as flow and reaction of the resins were good and it was not possible to distinguish the resultant product from a product produced by a conventional discontinuous process. According to this example the ratio of the period of pressure : period of zero or reduced pressure is 5 : 1. The preferred range of this ratio is about 1 : 1 to about 20 : 1.

Process Condition

It is clear that conditions influencing the final product and its characteristics such as pressure, temperature reaction time and speed can be varied. Pressure, for example will be dependent on the type and quality of resin or reactant employed. Temperature likewise is a variable factor of importance. The number of layers in the press materials will also influence the choice of conditions. On account of the number of parameters which influence the final choice of conditions it is not possible to give exact higher and lower limits for these. Nevertheless, based on a long series of trials it is possible to give some empirical data:

Pressure:                   Between 1-120 ato the preferred range
                            being 40-100 ato.


Temperature:                This is determined by the types of resin
                            or reactant employed, the pressure applied,
                            the thickness of the press materials and
                            the time available. A normal temperature
                            range will be between 100-190°C.

Pressure
elements:

These can be given different constructional characteristics for pressing of the material between them. Preferably they provide plane press surfaces. It can be mentioned that pressure can be applied mechanically, hydraulically, pneumatically or electro-magnetically.

The pressure elements can exert the required pulsating pressure directly to the press material and subsidiary foils or through two endless belts which are in contact with the material being pressed and which are moved during periods of zero or reduced pressure together with the press material.

According to the invention the press material and product are moved through the pressure zone each time the pressure elements pass through a period of zero or reduced pressure. No lower time limit exists for the period of zero or reduced pressure. In principle this will be as short as possible but in practice the zero or reduced pressure period must be of sufficient duration as to allow the necessary forward movement of the product. The intervals between zero or reduced and full pressure application will in practice be dependent on the inertia of the system.

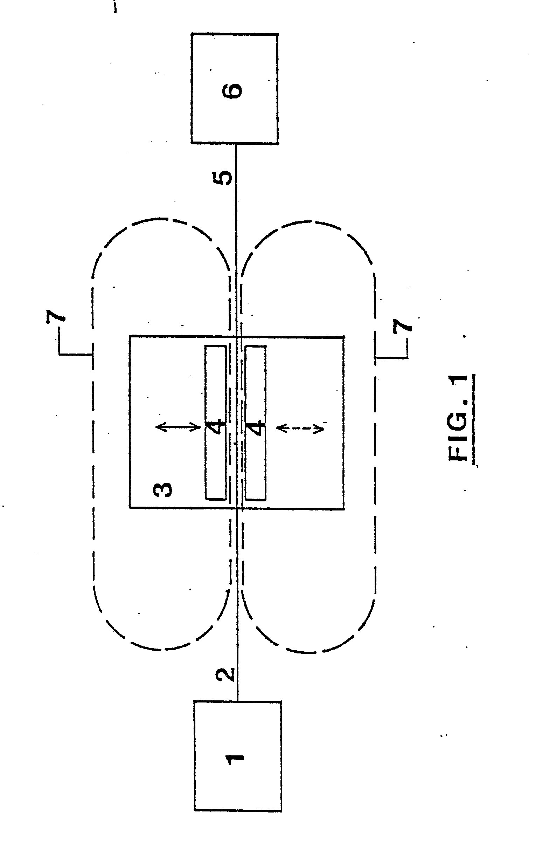

In order to illustrate better the procedure reference is made to the drawing showing the principle of operation (Fig. 1).

(1) refers to a magazine of press material in roll or sheet form. The press material (2) is fed through the pressure zone (3) between pressure plates (4) which at one moment exert a pressure on the press material and at the next are pressureless. Pressure application and removal are indicated by the double arrows in the diagram. The lower arrow is broken which indicates that this pressure element (4) can be fixed or movable. The higher pressure element is presumed movably as indicated by the unbroken arrow. The relation between movable and static pressure elements can be the converse of that described. A continuous stream of product (5) passes from the pressure zone and is accumulated at (6). The position of the endless belts (7) which are presumed in this example are shown in broken lines in relation to the other components. The broken lines indicate that the press can be equipped with endless belts or can be operated without.

It has not hitherto been known that, by the application of an alternating or pulsating pressure in the pressure zone, it is possible to perform a pressing operation in such a way that the resultant continuous product shows the homogeneous qualities associated with products produced by known and conventional methods.

Claims

1. Method for the production of continuous sheet formed
materials by feeding the press material through a press and
subjecting this to the effect of heat and pressure both of
which can be varied, c h a r a c t e r i z e d  in that
the pressure against the sheet formed press material is
released before the reaction in the press material is completed and that feeding of the press material occurs during
the period of no or reduced pressure and that pressure application and pressure removal alternate until the reaction
in the press product is completed.

2. Method according to claim 1, c h a r a c t e r i z e d
in that the number n of pulsating cycles (pressure build-up
and pressure reduction) is 2 and more, preferably 10 and more
and corresponds to the formula n = t : dt, t being the given
time for completing the reaction in the press product and
dt being the duration of one cycle.

3. Method according to claims 1 and/or 2, c h a r a c t e r i z e d
in that the press product is fed between plane pressure elements
which apply a pressure of between 1 - 120 ato to the press
product, preferably 40 - 100 ato.

4. Process according to claim 3, c h a r a c t e r i z e d
in that the press product is fed between two endless belts
which are subject to an alternating pressure produced by the
pressure elements between which they pass.

5. Press for the method according to claim 1 - 3,
concerning a magazine (1), a pressure zone (3) and a storage
(6) for accumulating of the press product, c h a r a c t e r-
i z e d  in that the pressure zone (3) comprises reciprocating
and pulsating pressure elements (4) with plane press surfaces.

6. Press according to claim 5, c h a r a c t e r - i z e d   in that it provides movable endless belts (7) for transportation of the press material and the press product accordingly through the passage between the pulsating pressure elements.

**FIG. 1**

0052664

## EUROPEAN SEARCH REPORT

European Patent Office

Application number

EP 80 10 7253

### DOCUMENTS CONSIDERED TO BE RELEVANT

| Category | Citation of document with indication, where appropriate, of relevant passages | Relevant to claim |
|---|---|---|
| X | <u>GB - A - 708 342</u> (DYNAMIT)<br>* Page 1, lines 10-21, 47-68; page 2, lines 1-40; page 4, lines 15-130; page 5, lines 1-94; figures 1-12 * | 1-6 |
| | --- | |
| X | <u>GB - A - 720 230</u> (DYNAMIT A.G.)<br>* Page 1, lines 58-88; page 2, lines 1-31; page 3, lines 57-84; figures 1-4 * | 1,3-6 |
| | --- | |
| | <u>FR - A - 1 579 966</u> (TAKIRON CHEMICAL CO.)<br>* Page 3, lines 11-32; page 4, lines 40-45; page 5, figures 4 and 5 * | 1 |
| | --- | |
| A | <u>DE - B - 1 213 976</u> (HOOVER BALL and BEARING CO.) | |
| DA | <u>DE - B - 1 216 522</u> (HOOVER BALL and BEARING CO.) | |
| A | <u>FR - A - 1 383 846</u> (HOOVER BALL and BEARING CO.) | |
| | ---- | |

**CLASSIFICATION OF THE APPLICATION (Int. Cl.³)**

B 32 B 31/20
B 29 D  9/00

**TECHNICAL FIELDS SEARCHED (Int. Cl.³)**

B 32 B

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 29-07-1981 | VAN THIELEN |

EPO Form 1503.1   06.78